# EUROPÄISCHE PATENTSCHRIFT

(11) **EP 2 851 654 B1**
(45) Veröffentlichungstag und Bekanntmachung des Hinweises auf die Patenterteilung: **15.06.2016**
(21) Anmeldenummer: 14173436.8
(22) Anmeldetag: 23.06.2014
(51) Int. Cl.: G01D 3/08

(54) **Absolutes Positionsmessgerät**
Absolute position measuring device
Appareil de mesure de position absolu

(30) Priorität: 24.09.2013 DE 102013219099
(43) Veröffentlichungstag der Anmeldung: 25.03.2015
(73) Patentinhaber: Dr. Johannes Heidenhain GmbH, 83301 Traunreut (DE)
(72) Erfinder: Thielicke, Ernst, 83278 Traunstein (DE); Auer, Daniel, 83278 Traunstein (DE); Bratzdrum, Erwin, 83362 Surberg (DE)

(56) Entgegenhaltungen:
- WO-A1-2006/069786
- JP-A- S 564 008
- US-A1- 2006 237 649
- US-B1- 7 274 305

## Beschreibung

Die Erfindung betrifft ein absolutes Positionsmessgerät nach Anspruch 1, sowie ein Verfahren zur Betreiben eines derartigen Positionsmessgeräts nach Anspruch 8. Ein derartiges absolutes Positionsmessgerät ist geeignet, in Anlagen oder Maschinen eingesetzt zu werden, in denen es hochenergetischer, ionisierender Strahlung ausgesetzt ist.

Positionsmessgeräte werden in verschiedensten technischen Gebieten benötigt, um bei Anlagen und Maschinen die Position (Länge oder/und Winkel) beweglicher Komponenten zu bestimmen. Derartige Positionsmessgeräte werden aufgrund ihres Funktionsprinzips in zwei Gruppen unterschieden, zum einen gibt es inkrementale Positionsmessgeräte, bei denen die Positionsermittlung auf dem Zählen von Teilungsperioden einer Inkrementalteilung basiert, zum anderen absolute Positionsmessgeräte, bei denen die Position durch Abtastung und Auswertung einer Absolutteilung gewonnen wird.

Inkrementale Positionsmessgeräte weisen gegenüber absoluten Positionsmessgeräten einen einfachen, robusten Aufbau auf, haben aber den Nachteil, dass unmittelbar nach dem Einschalten keine Positionsinformation vorhanden ist und erst durch eine sog. Referenzfahrt eine Referenzmarke überfahren werden muss, um auf die absolute Position schließen zu können. In vielen technischen Bereichen werden deshalb mittlerweile bevorzugt absolute Positionsmessgeräte eingesetzt, bei denen jederzeit, auch unmittelbar nach dem Einschalten, ein absoluter Positionswert zur Verfügung steht. Ein absolutes Positionsmessgerät ist beispielsweise in der EP 0 660 209 A1 beschrieben.

Ein technischer Bereich, bei dem der Einsatz absoluter Positionsmessgeräte nach wie vor problematisch ist, sind Anlagen oder Maschinen, die ionisierender, hochenergetischer Strahlung ausgesetzt sind, oder deren Anwendungsgebiet den Einsatz derartiger Strahlung erfordert. Insbesondere sei hier die Medizintechnik genannt, wo ionisierende, hochenergetische Strahlung gezielt eingesetzt wird, um Krankheiten zu heilen oder deren Fortschreiten zu verzögern. Vorwiegend wird hier Gammastrahlung, Röntgenstrahlung oder Teilchenstrahlung (Protonen, Neutronen, Elektronen, etc.) verwendet.

Es hat sich gezeigt, dass sich inkrementale Positionsmessgeräte, die derartiger Strahlung ausgesetzt sind, aufgrund ihres einfachen Aufbaus recht robust verhalten. Absolute Positionsmessgeräte dagegen, die zur Ermittlung eines absoluten Positionswerts einen komplexeren Aufbau erfordern, neigen dazu auszufallen, wenn sie ionisierender, hochenergetischer Strahlung ausgesetzt werden. Als besonders problematische Komponenten haben sich Speicherbausteine erwiesen, da sich Speicherinhalte unter dem Einfluss von Strahlung verändern können. Die so hervorgerufenen Ausfälle sind oft schwer nachzuvollziehen, da sie uneinheitliche Fehlerbilder verursachen.

Die derzeit noch unveröffentlichte deutsche Patentanmeldung mit dem Aktenzeichen 102012218890.8 beschreibt ein absolutes Positionsmessgerät, das dennoch für den Einsatz in einem Umfeld, indem es ionisierender, hochenergetischer Strahlung ausgesetzt sein kann, geeignet ist. Es besteht aus zwei Baugruppen, wobei die erste Baugruppe Funktionsblöcke umfasst, die unmittelbar der Positionsmessung dienen, und die zweite Baugruppe Funktionsblöcke umfasst, die Hilfs- und Zusatzfunktionen ausführen. Die erste Baugruppe ist vollständig aus sog. strahlungsharten Bauteilen aufgebaut, also Bauteilen, die für den Einsatz in einem Strahlungsbereich einer Maschine geeignet sind. Da die zweite Baugruppe räumlich getrennt von der ersten Baugruppe und somit außerhalb des Strahlungsbereichs der Maschine angeordnet werden kann, kann die zweite Baugruppe aus herkömmlichen Bauteilen aufgebaut sein. Diese Trennung der Funktionen des Positionsmessgeräts ermöglicht ein günstiges Kosten/Nutzen Verhältnis.

Dies gilt auch für den Servicefall, da es ggf. ausreicht, eine der Baugruppen auszutauschen. In der Praxis wird es sich bei der auszutauschenden Baugruppe meist um die erste Baugruppe handeln, nicht nur, weil diese im Umfeld von ionisierender, hochenergetischer Strahlung betrieben wird, sondern auch, weil diese Baugruppe mechanischem Verschleiß, Temperaturschwankungen, etc. ausgesetzt ist.

Der ersten Baugruppe sind nun häufig vom Hersteller Daten zugeordnet, die für den Betrieb des Positionsmessgeräts benötigt werden. Bei den Daten kann es sich um Informationen zur technischen Spezifikation (Auflösung, Schnittstellenprotokoll, Typbezeichnung,...), handeln, die in Fachkreisen auch als elektronisches Typenschild bezeichnet werden. Darüber hinaus können diese Daten Kalibrierwerte umfassen, die zur Optimierung der Genauigkeit des Positionsmessgeräts benötigt werden. Da der Einsatz von Speicherbausteinen aus den oben genannten Gründen problematisch ist, müssen diese Daten vom Hersteller des Positionsmessgeräts, bzw. der ersten Baugruppe, separat mit dieser ausgeliefert werden, beispielsweise gespeichert auf einem Datenträger (DVD-ROM, CD-ROM,...) oder in Papierform.

Ein Servicetechniker, der den Austausch der ersten Baugruppe vornimmt, muss dann auch die mitgelieferten Daten dorthin kopieren, wo sie für den Betrieb des Positionsmessgeräts benötigt werden, also entweder in die zweite Baugruppe (da diese außerhalb das Strahlungsbereichs der Maschine betrieben wird, können in dieser Speicherbausteine eingesetzt werden), oder in die Folgeelektronik, an der das Positionsmessgerät angeschlossen ist (z.B. eine Numerische Steuerung). Diese Vorgehensweise ist jedoch nicht gewünscht, da sie aufwändig und fehleranfällig ist.

Es ist daher Aufgabe der Erfindung, ein gattungsgemäßes absolutes Positionsmessgerät zu schaffen, das servicefreundlich ist.

Diese Aufgabe wird gelöst durch ein absolutes Positionsmessgerät nach Anspruch 1. Vorteilhafte Details eines derartigen absoluten Positionsmessgeräts ergeben sich aus den von Anspruch 1 abhängigen Ansprüchen.

Es wird nun ein absolutes Positionsmessgerät vorgeschlagen, umfassend
- eine erste Baugruppe, mit einer Maßverkörperung, auf der wenigstens eine Codespur angeordnet ist und einer Abtasteinheit, mit der durch Abtastung der wenigstens einen Codespur in einer Messrichtung Positionssignale erzeugbar sind, aus denen ein absoluter, digitaler Positionswert generierbar ist,
- eine zweite Baugruppe, mit wenigstens einer Peripherieeinheit, ausgebildet zur Ausführung einer Zusatz- oder Hilfsfunktion des Positionsmessgeräts und
- eine Mehrzahl elektrischer Leitungen, mit denen die erste Baugruppe und die zweite Baugruppe zur Übertragung elektrischer Signale miteinander verbunden sind,
wobei das Positionsmessgerät in einem Inbetriebnahmemodus und einem Normalbetriebsmodus betreibbar ist und alle Komponenten der ersten Baugruppe, die für den Betrieb im Normalbetriebsmodus erforderlich sind, Komponenten sind, die für den Einsatz in einem Strahlungsbereich einer Maschine geeignet sind und in der ersten Baugruppe weiter ein Inbetriebnahmespeicher vorgesehen ist, der Daten enthält, die für den Betrieb im Normalbetriebsmodus erforderlich sind und der nicht für den Einsatz in einem Strahlungsbereich einer Maschine geeignet ist und der Inhalt des Inbetriebnahmespeichers im Inbetriebnahmemodus zu einer Speichereinheit übertragbar ist, die außerhalb des Strahlungsbereichs angeordnet ist und für den Betrieb im Normalbetriebsmodus der Inhalt der Speichereinheit verwendet wird.

Weiter ist es Aufgabe der Erfindung, ein Verfahren zur sicheren Inbetriebnahme eines derartigen Positionsmessgeräts anzugeben.

Diese Aufgabe wird gelöst durch ein Verfahren nach Anspruch 8. Vorteilhafte Details eines derartigen Verfahrens ergeben sich aus den von Anspruch 8 abhängigen Ansprüchen.

Es wird ein Verfahren zum Betreiben eines absoluten Positionsmessgeräts vorgeschlagen, umfassend
- eine erste Baugruppe, mit einer Maßverkörperung, auf der wenigstens eine Codespur angeordnet ist und einer Abtasteinheit, mit der durch Abtastung der wenigstens einen Codespur in einer Messrichtung Positionssignale erzeugbar sind, aus denen ein absoluter, digitaler Positionswert generierbar ist,
- eine zweite Baugruppe, mit wenigstens einer Peripherieeinheit, ausgebildet zur Ausführung einer Zusatz- oder Hilfsfunktion des Positionsmessgeräts und
- eine Mehrzahl elektrischer Leitungen, mit denen die erste Baugruppe und die zweite Baugruppe zur Übertragung elektrischer Signale miteinander verbunden sind,
wobei das Positionsmessgerät in einem Inbetriebnahmemodus und einem Normalbetriebsmodus betreibbar ist und alle Komponenten der ersten Baugruppe, die für den Betrieb im Normalbetriebsmodus erforderlich sind, Komponenten sind, die für den Einsatz in einem Strahlungsbereich einer Maschine geeignet sind und in der ersten Baugruppe weiter ein Inbetriebnahmespeicher vorgesehen ist, der Daten enthält, die für den Betrieb im Normalbetriebsmodus erforderlich sind und der nicht für den Einsatz in einem Strahlungsbereich einer Maschine geeignet ist. Entsprechend dem vorgeschlagenen Verfahren wird der Inhalt des Inbetriebnahmespeichers im Inbetriebnahmemodus zu einer Speichereinheit übertragen, die außerhalb des Strahlungsbereichs angeordnet ist und für den Betrieb im Normalbetriebsmodus wird der Inhalt der Speichereinheit verwendet.

Weitere Vorteile sowie Einzelheiten der vorliegenden Erfindung ergeben sich aus der nachfolgenden Beschreibung anhand der Figuren. Dabei zeigt
- Figur 1a: eine vereinfachte Darstellung eines medizinischen Bestrahlungsgeräts in der Draufsicht,
- Figur 1b: eine vereinfachte Darstellung eines medizinischen Bestrahlungsgeräts in der Seitenansicht,
- Figur 2: ein Blockdiagramm einer ersten Ausführungsform erfindungsgemäßen Positionsmessgeräts,
- Figur 3: ein Blockdiagramm einer weiteren Ausführungsform erfindungsgemäßen Positionsmessgeräts,
- Figur 4: ein Blockdiagramm einer weiteren Ausführungsform erfindungsgemäßen Positionsmessgeräts und
- Figur 5: ein Blockdiagramm einer weiteren Ausführungsform erfindungsgemäßen Positionsmessgeräts.

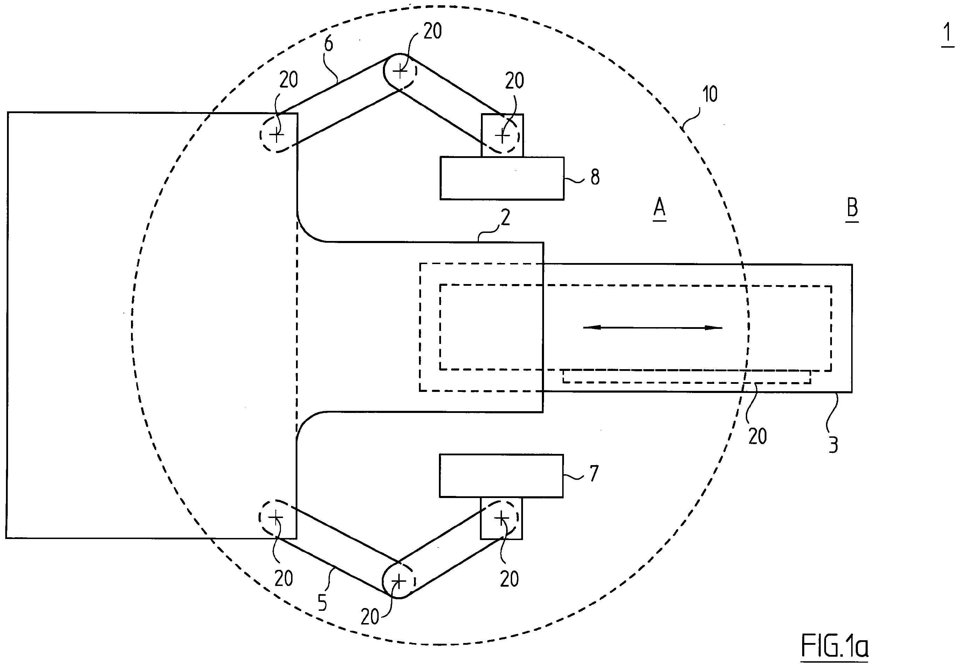

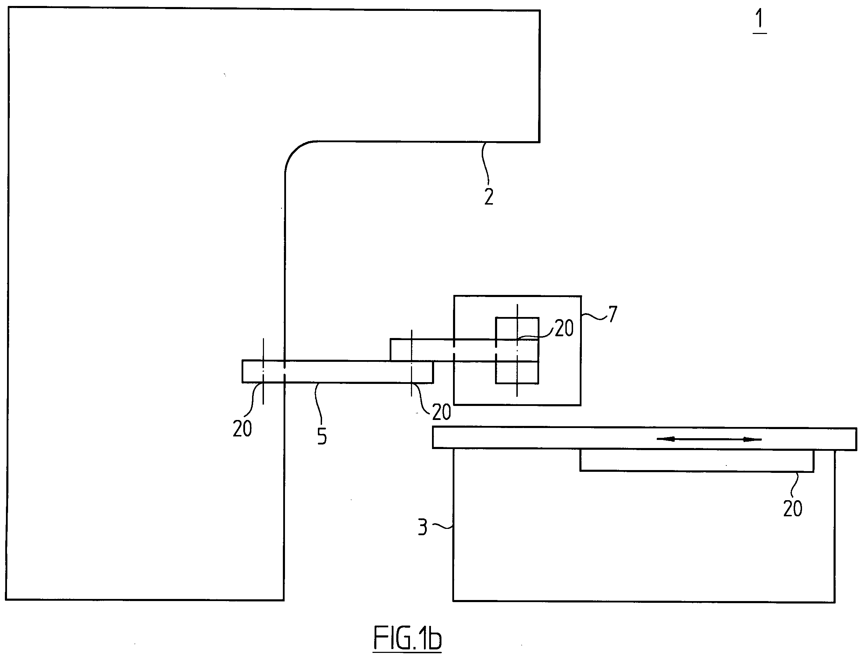

Die Figuren 1 a und 1 b zeigen als Beispiel für eine Anlage, in der ionisierende, hochenergetische Strahlung, insbesondere Gammastrahlung, Röntgenstrahlung oder Elektronenstrahlung, zum Einsatz kommt, eine vereinfachte Darstellung einer Draufsicht (Figur 1a) und einer Seitenansicht (Figur 1 b) eines medizinischen Bestrahlungsgeräts 1. Eine Strahlenquelle 2 des Bestrahlungsgeräts 1 befindet sich oberhalb des gezeichneten Kopfendes einer Patientenliege 3. Dabei wurde der Übersichtlichkeit halber auf eine detaillierte Darstellung der Strahlenquelle verzichtet, es soll angenommen werden, dass die ionisierende, hochenergetische Strahlung, die beispielsweise zur Bestrahlung eines Tumors verwendet wird, vorwiegend innerhalb des in Figur 1a gezeichneten Kreises 10 auftreten kann. Die Fläche innerhalb des Kreises 10 wird daher im Folgenden als Strahlungsbereich A bezeichnet. Außerhalb des Strahlungsbereichs A und somit des Kreises 10 befindet sich ein strahlungssicherer Bereich B.

Selbstverständlich ist diese Unterteilung stark vereinfacht und dient vorwiegend zur Beschreibung der vorliegenden Erfindung. In der Praxis nimmt die Energie der auftretenden Strahlung mit steigendem Abstand von der Strahlungsquelle ab, es kann also keine exakte Grenzlinie gezogen werden. Für die folgenden Ausführungen wird unter der Bezeichnung Strahlungsbereich A der Bereich einer Anlage verstanden, in dem ionisierende, hochenergetische Strahlung in einer Dosis auftreten kann, die die Funktionssicherheit eines herkömmlichen absoluten Positionsmessgeräts beeinträchtigen kann. Als strahlungssicherer Bereich B wird dagegen der Bereich um eine Anlage bezeichnet, in dem die Funktionssicherheit herkömmlicher absoluter Positionsmessgeräte nicht von der auftretenden Strahlung beeinträchtigt wird.

Neben der Einhaltung eines bestimmten Mindestabstands von der Strahlungsquelle kann ein strahlungssicherer Bereich B auch geschaffen werden, indem in Ausbreitungsrichtung der Strahlung eine abschirmende Barriere eingebracht wird. Ein besonders geeignetes Material hierfür ist Blei.

Am medizinischen Bestrahlungsgerät sind zwei Roboterarme 5 und 6 angeordnet, wobei der erste Roboterarm 5 eine Sendeeinheit 7 und der zweite Roboterarm 6 eine Empfangseinheit 8 eines Computertomographen (CT) trägt. Die Roboterarme 5, 6 dienen zur präzisen Positionierung der Sendeeinheit 7 und der Empfangseinheit 8 mit Hilfe von Servomotoren (nicht dargestellt), ihre Position wird mit Positionsmessgeräten 20, insbesondere Drehgebern oder Winkelmessgeräten, bestimmt, die in den Gelenken der Roboterarme 5, 6 angeordnet sind.

Die Patientenliege ist in Richtung des eingezeichneten Pfeils verfahrbar ausgeführt, ihre Position wird mit einem weiteren Positionsmessgerät 20, insbesondere einem Längenmessgerät, gemessen.

In derartigen medizinischen Bestrahlungsgeräten wird zum Teil bereits eine Strahlungsenergie von mehr als 20 MeV verwendet. Über die Lebensdauer einer solchen Anlage kann somit eine erhebliche Strahlungsdosis in die Positionsmessgeräte 20 eingebracht werden. Bei der eingesetzten Strahlung kann es sich um Gammastrahlung, Röntgenstrahlung oder Teilchenstrahlung (Protonen, Neutronen, Elektronen, etc.) handeln.

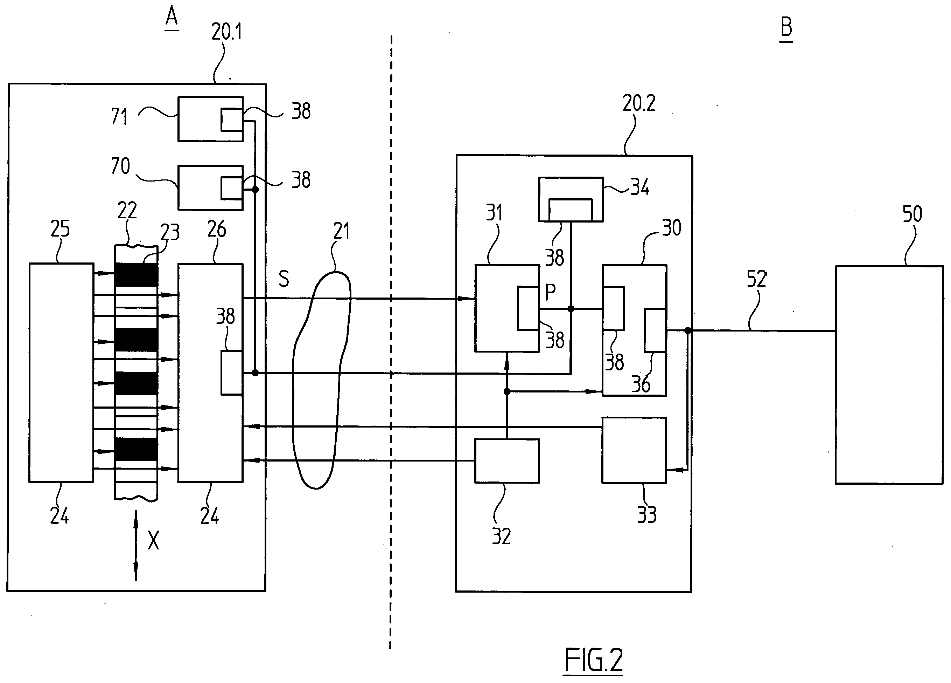

Figur 2 zeigt ein Blockdiagramm eines erfindungsgemäßen Positionsmessgeräts 20, das für den Einsatz in einer Anlage, in der das Positionsmessgerät 20 einer ionisierenden, hochenergetischen Strahlung ausgesetzt sein kann, geeignet ist. Das Positionsmessgerät 20 besteht aus einer ersten Baugruppe 20.1 und einer zweiten Baugruppe 20.2. Zur Übertragung elektrischer Signale zwischen der ersten Baugruppe 20.1 und der zweiten Baugruppe 20.2 sind diese über eine Mehrzahl von elektrischen Leitungen 21 miteinander verbunden. Bestimmungsgemäß wird die erste Baugruppe 20.1 im Strahlungsbereich A (in Figur 2 links von der senkrechten gestrichelten Linie) und die zweite Baugruppe 20.2 im strahlensicheren Bereich B einer Maschine oder Anlage eingesetzt.

Die erste Baugruppe 20.1 umfasst zur Erzeugung von Positionssignalen S, die zu einem absoluten Positionswert P verarbeitbar sind, eine Maßverkörperung 22 mit wenigstens einer Codespur 23, sowie eine Abtasteinheit 24 zur Abtastung der wenigstens einen Codespur 23. Die Codespur 23 kann parallel (z.B. Gray-Code) oder, wie in Figur 2 angedeutet, seriell codiert sein (Pseudo Random Code; PRC). Die Codierung kann aber auch analog ausgeführt sein, etwa durch mehrere parallel angeordnete Codespuren 23, die eine unterschiedliche Teilungsperiode aufweisen (Schwebungs- oder Noniusprinzip). Die Maßverkörperung 22 und die Abtasteinheit 24 sind in einer Messrichtung X relativ zueinander beweglich angeordnet.

Handelt es sich bei dem Positionsmessgerät 20 um ein Längenmessgerät, so ist die Maßverkörperung 22 beispielsweise ein Maßstab, auf dem die Codespur 23 aufgebracht ist. Bei einem Drehgeber oder Winkelmessgerät ist die Maßverkörperung 22 üblicherweise als kreisförmige Scheibe ausgeführt und die Codespur 23 ist ringförmig um den Mittelpunkt der Scheibe angeordnet.

In diesem Ausführungsbeispiel wird angenommen, dass das Positionsmessgerät 20 nach dem optischen Durchlichtprinzip arbeitet, d.h. die Positionsinformation der Codespur 23 ist durch eine Folge von lichtdurchlässigen und lichtundurchlässigen Bereichen codiert und die Abtasteinheit 24 umfasst eine Lichtquelle 25, die auf einer Seite der Maßverkörperung 22 angeordnet ist und die Licht in Richtung der Codespur 23 abstrahlt und eine Detektoreinheit 26, die aus dem durch die Codespur 23 modulierten Licht die Positionssignale S generiert. Die Positionssignale S können sowohl analog, als auch digital vorliegen und sind geeignet, aus ihnen einen absoluten, digitalen Positionswert P zu generieren.

Neben dem optischen Abtastprinzip sind auch andere Abtastprinzipien einsetzbar, insbesondere magnetische, kapazitive oder induktive. Ebenso kann ein optisches Auflichtprinzip zum Einsatz kommen, bei dem die Codespur 23 aus reflektierenden und nicht reflektierenden Bereichen besteht und deshalb die Lichtquelle 25 und die Detektoreinheit 26 auf einer Seite der Maßverkörperung 22 angeordnet sind.

Erfindungsgemäß ist in der ersten Baugruppe 20.1 weiter ein Inbetriebnahmespeicher 70 angeordnet. Er enthält Daten, die für den Betrieb des Positionsmessgeräts 20 relevant sind, beispielsweise Informationen zur technischen Spezifikation (Auflösung, Schnittstellenprotokoll, Typbezeichnung,...), oder Kalibrierwerte. Der Inbetriebnahmespeicher 70 wird vom Hersteller des Positionsmessgeräts 20, bzw. konkret der ersten Baugruppe 20.1, programmiert und dessen Inhalt ist über eine Schnittstelle 38 auslesbar. Dadurch, dass im Servicefall, wenn die erste Baugruppe 20.1 getauscht werden muss, die für den Betrieb relevanten Daten stets mit ausgeliefert werden, kann, wie unten gezeigt werden wird, die Wiederinbetriebnahme des Positionsmessgeräts 20 so vereinfacht werden, dass Konfigurationsfehler praktisch ausgeschlossen sind.

Die zweite Baugruppe 20.2 umfasst Peripherieeinheiten des Positionsmessgeräts 20, die Zusatz- oder Hilfsfunktionen ausführen. Beispielsweise kann die zweite Baugruppe 20.2 eine Kommunikationseinheit 30, eine Signalverarbeitungseinheit 31, eine Reset-Einheit 32, eine Spannungsversorgungseinheit 33 und eine Speichereinheit 34 umfassen.

Zumindest einige der Peripherieeinheiten (in diesem ersten Ausführungsbeispiel die Kommunikationseinheit 30, die Signalverarbeitungseinheit 31 und die Speichereinheit 34), sowie die Abtasteinheit 24, bzw. die Detektoreinheit 26 in der ersten Baugruppe 20.1, weisen eine interne Schnittstelle 38 auf. Ebenso ist die Schnittstelle des Inbetriebnahmespeichers 70 eine interne Schnittstelle 38. Außerdem kann die Abtasteinheit 24 eine interne Schnittstelle 38 umfassen. Alle internen Schnittstellen 38 sind über geeignete Signalleitungen miteinander verbunden. Die internen Schnittstellen 38 stellen die physikalischen Voraussetzungen für eine Kommunikation bereit und sind geeignet ausgestaltet, um Daten nach den Regeln eines Schnittstellenprotokolls zu übertragen. Die Datenübertragung kann parallel oder seriell erfolgen.

Die Kommunikationseinheit 30 stellt auf der einen Seite eine digitale Geräteschnittstelle 36 zur Verfügung, über die die Kommunikation mit einer Steuerungseinheit 50 erfolgt, an der das Positionsmessgerät 20 betrieben wird. Die Geräteschnittstelle 36 umfasst zum einen die physikalischen Voraussetzungen für die Kommunikation (Signalpegel, Datenrate, Steckverbinder,...) und zum anderen ein Kommunikationsprotokoll, das die Kommunikationsregeln zwischen dem Positionsmessgerät 20 und der Steuerungseinheit 50 festlegt. Mit Vorteil ist die Geräteschnittstelle 36 als eine serielle, insbesondere synchron-serielle Schnittstelle ausgeführt, wobei die Signale in bekannter Weise differentiell, beispielsweise nach dem RS-485-Standard, übertragen werden. Die zweite Baugruppe 20.2 und die Steuerungseinheit 50 sind über ein geeignetes Datenübertragungskabel 52 miteinander verbunden.

Wie oben bereits erwähnt, stellt die Kommunikationseinheit 30 auf der anderen Seite eine interne Schnittstelle 38 zur Verfügung, die zur Kommunikation mit Peripherieeinheiten der zweiten Baugruppe 20.2 (im dargestellten Beispiel mit der Signalverarbeitungseinheit 31 und der Speichereinheit 34), sowie mit der ersten Baugruppe 20.1, insbesondere auch zum Auslesen des Inbetriebnahmespeichers 70 geeignet ist. Da es vorteilhaft ist, wenn die Kommunikation von der Kommunikationseinheit 30 gesteuert ist, ist die interne Schnittstelle 38 der Kommunikationseinheit 30 bevorzugt als sog. Master-Schnittstelle, und die interne Schnittstelle 38 der weiteren Komponenten als Slave-Schnittstelle ausgeführt. Über die Schnittstellenverbindung Steuerungseinheit 50 - Geräteschnittstelle 36 - interne Schnittstelle 36 ist auch ein Zugriff der Steuerungseinheit 50 auf Komponenten, die eine interne Schnittstelle 38 aufweisen, möglich. Insbesondere können über diese Schnittstellenverbindung Speicherinhalte des Inbetriebnahmespeichers 70 und der Speichereinheit 34 gelesen und ggf. programmiert werden.

Die Signalverarbeitungseinheit 31 dient dazu, aus den Positionssignalen S, die der zweiten Baugruppe 20.2 von der ersten Baugruppe 20.1 über die elektrischen Leitungen 21 zugeführt werden, einen digitalen, absoluten Positionswert P zu generieren und diesen, ggf. als Antwort auf einen Positionsanforderungsbefehl der Steuerungseinheit 50, über die interne Schnittstelle 38 an die Kommunikationseinheit 30 zu übertragen. Die Funktionen der Signalverarbeitungseinheit 31 können hierfür Analog-Digital-Wandlung, Erkennung von fehlerhaften Positionssignalen S, Auswahl gültiger Signale aus einer Anzahl redundanter Positionssignale S, etc. umfassen.

Die Funktion der Reset-Einheit 32 kann beispielsweise die Überwachung der Versorgungsspannung des Positionsmessgeräts 20 und die Ausgabe eines Resetsignals im Falle von Schwankungen der Versorgungsspannung umfassen, um undefinierte Betriebszustände zu verhindern. Die Reset-Einheit 32 sorgt unter anderem auch dafür, dass nach dem Einschalten des Positionsmessgeräts 20 der Normalbetrieb erst dann freigegeben wird, wenn die Versorgungsspannung einen bestimmten Spannungspegel stabil überschritten hat. Auch das Resetsignal kann sowohl Peripherieeinheiten der zweiten Baugruppe 20.2 (im dargestellten Beispiel der Kommunikationseinheit 30 und der Signalverarbeitungseinheit 31), als auch über die elektrischen Leitungen 21 der ersten Baugruppe 20.1 zugeführt sein.

Die Spannungsversorgungseinheit 33 dient dazu, eine Versorgungsspannung, die dem Positionsmessgerät 20 beispielsweise über das Datenübertragungskabel 52 von der Steuerungseinheit 50 zugeführt wird, zu stabilisieren und/oder den Spannungspegel an die Erfordernisse der Komponenten des Positionsmessgeräts, bzw. der ersten Baugruppe 20.1 und der zweiten Baugruppe 20.2 anzupassen. Hierzu kann es erforderlich sein, dass die Spannungsversorgungseinheit 33 mehrere verschiedene Ausgänge ggf. mit unterschiedlichen Spannungen zur Verfügung stellt und über die elektrischen Leitungen 21 an die erste Baugruppe 20.1 überträgt. Ebenso kann die Spannungsversorgungseinheit 33 geeignet sein, aus einer variablen Eingangsspannung eine oder mehrere konstante Ausgangsspannungen zu erzeugen.

Die Speichereinheit 34 ist in diesem Ausführungsbeispiel geeignet ausgeführt, um die im Inbetriebnahmespeicher 70 gespeicherten Daten zu speichern. Die Speichereinheit 34 kann über die interne Schnittstelle 38 ausgelesen und programmiert werden. Der Zugriff auf die Speichereinheit 34 von der Steuerungseinheit 50 kann über die Geräteschnittstelle 36 und die interne Schnittstelle 38 unter Vermittlung der Kommunikationseinheit 30 erfolgen.

Erfindungsgemäß ist das Positionsmessgerät 20 in wenigstens zwei Betriebsmodi betreibbar, zum einen in einem Normalbetriebsmodus und zum anderen in einem Inbetriebnahmemodus. Unter dem Normalbetriebsmodus ist der Betriebsmodus zu verstehen, in dem das Positionsmessgerät 20 bestimmungsgemäß zum Messen von Positionswerten und zu deren Übertragung zu einer Steuerungseinheit 50 eingesetzt wird. Das Messen und Übertragen der Positionswerte kann dabei durch Befehle von der Steuerungseinheit 50 gesteuert werden. Da die erste Baugruppe 20.1 des Positionsmessgeräts 20 dazu geeignet sein soll, im Strahlungsbereich A betrieben zu werden, sind alle Komponenten der ersten Baugruppe 20.1, die für den Betrieb im Normalbetriebsmodus benötigt werden, strahlungshart ausgeführt, also so, dass sie für den Einsatz in einem Strahlungsbereich A einer Maschine geeignet sind.

Dadurch, dass die zweite Baugruppe 20.2 des Positionsmessgeräts 20 im strahlungssicheren Bereich B (rechts von der gestrichelten Linie) angeordnet ist, ist es dagegen nicht notwendig, die Komponenten der zweiten Baugruppe 20.2 mit strahlungsresistenten (strahlungsharten) Komponenten auszustatten.

Erfindungsgemäß ist der Inbetriebnahmespeicher 70, obwohl er sich in der ersten Baugruppe 20.1 befindet, nun gerade nicht strahlungshart ausgeführt und somit eigentlich nicht für den Einsatz im Strahlungsbereich A geeignet. Aus diesem Grund ist der Inbetriebnahmemodus dafür vorgesehen, den Inhalt des Inbetriebnahmespeichers 70 in einen Speicher zu übertragen, der im strahlungssicheren Bereich B angeordnet ist. In diesem Ausführungsbeispiel ist das die Speichereinheit 34 in der zweiten Baugruppe 20.2. Weil im Normalbetriebsmodus mit dem Speicherinhalt der Speichereinheit 34 anstelle des Inhalts des Inbetriebnahmespeichers 70 gearbeitet wird, hat eine durch die Bestrahlung mit hochenergetischer, ionisierender Strahlung verursachte Änderung des Speicherinhalts des Inbetriebnahmespeichers 70 keine Auswirkungen auf die Funktionsfähigkeit des Positionsmessgeräts 20.

Dieser Lösung liegen Laboruntersuchungen zugrunde, die ergeben haben, dass der Einsatz eines nicht strahlungsresistenten (strahlungsharten) Speicherbausteins im Strahlungsbereich A einer Maschine oder Anlage außer einer möglichen Veränderung des Speicherinhalts keine schädlichen Auswirkungen auf die übrigen Komponenten der ersten Baugruppe 20.1 hat. In anderen Worten ist die Funktionsfähigkeit der ersten Baugruppe 20.1 im Normalbetriebsmodus gewährleistet, auch wenn der Speicherbaustein hochenergetischer, ionisierender Strahlung ausgesetzt wird. Dadurch, dass der Inhalt des Inbetriebnahmespeichers 70 nur zur Inbetriebnahme relevant ist, nämlich zur Übertragung in einen im strahlungssicheren Bereich B betriebenen Speicher (im vorliegenden Ausführungsbeispiel in die Speichereinheit 34), und im weiteren Betrieb unbenutzt bleibt, ist eine Veränderung des Speicherinhalts des Inbetriebnahmespeichers 70 für die Funktionsfähigkeit des Positionsmessgeräts 20 belanglos.

Das Aktivieren des Inbetriebnahmemodus kann, beispielsweise von der Steuerungseinheit 50 automatisch unmittelbar nach dem Einschalten des Positionsmessgeräts 20 initiiert werden. Im Inbetriebnahmemodus können dann die Daten aus dem Inbetriebnahmespeicher 70 in die Speichereinheit 34 übertragen werden. Dabei ist es vorteilhaft, wenn die Daten im Inbetriebnahmespeicher 70 durch Datenüberprüfungsmechanismen gesichert sind, etwa durch einen CRC-Code, oder durch redundante Codierung. Auf diese Weise kann ggf. festgestellt werden, ob der Inbetriebnahmespeicher 70 bereits verändert wurde. Unter Umständen kann die Inbetriebnahme sogar trotz beschädigter Speicherzellen durchgeführt werden, indem Fehlerkorrekturalgorithmen eingesetzt werden. Nach erfolgter Kopie der Daten geht das Positionsmessgerät 20 in den Normalbetriebsmodus über, entweder automatisch, oder ebenfalls initiiert von der Steuerungseinheit 50.

Da es normalerweise ausreicht, den Inbetriebnahmespeicher 70 einmal, eben bei der Inbetriebnahme der ersten Baugruppe 20.1 zusammen mit der zweiten Baugruppe 20.2, zu kopieren, kann ein Verriegelungsmechanismus vorgesehen sein, der es erkennbar macht, ob bereits eine Inbetriebnahme durchgeführt wurde, oder nicht. Hierzu kann in der ersten Baugruppe 20.1 beispielsweise ein Identifikationsspeicher 71 vorgesehen sein. Dieser ist strahlungsresistent ausgeführt und ist ebenfalls mit einer internen Schnittstelle 38 ausgestattet.

In einer ersten Variante ist der Identifikationsspeicher 71 programmierbar ausgeführt und wird nach erfolgter Kopie des Inbetriebnahmespeichers 70 entsprechend programmiert. Hierfür ist ggf. eine einzige Speicherzelle ausreichend. Die Programmierung ist mit Vorteil irreversibel und kann beispielsweise durch Durchschmelzen einer dafür vorgesehenen Leiterbahn ("fuse") erfolgen. Eine weitere Möglichkeit ist, die Speicherzellen als Transistorstrukturen auszuführen und eine leitende Verbindung zwischen Emitter und Basis der Transistorstruktur herzustellen ("zener zapping", bzw. "zener antifuse"). Durch Auslesen des Identifikationsspeichers 71 ist dann jederzeit feststellbar, ob bereits eine Inbetriebnahme durchgeführt wurde, oder nicht.

In einer zweiten Variante ist im Identifikationsspeicher 71 eine eindeutige Kennung (z.B. eine Seriennummer) gespeichert, die die erste Baugruppe 20.1 kennzeichnet. Diese eindeutige Kennung kann bei der Inbetriebnahme in der Speichereinheit 34 der zweiten Baugruppe 20.2 mit abgespeichert werden. Durch Vergleich der Kennung im Identifikationsspeicher 71 mit der in der Speichereinheit 34 gespeicherten Kennung kann festgestellt werden, ob bereits eine Inbetriebnahme erfolgt ist, oder nicht. Im ersten Fall kann das Positionsmessgerät 20 sofort in den Normalbetriebsmodus geschaltet werden.

Anhand des Inhalts des Identifikationsspeichers 71, ggf. in Verbindung mit der in der Speichereinheit 34 gespeicherten Kennung, kann die Steuerungseinheit 50 somit entscheiden, ob eine Inbetriebnahme vorgenommen werden muss, oder nicht. Als weitere Sicherheitsvorkehrung kann eine Sicherheitsabfrage vorgesehen sein, beispielsweise indem die Steuerungseinheit 50 die festgestellte Notwendigkeit einer Inbetriebnahme zuerst auf einer Anzeigeeinheit (Bildschirm) anzeigt und die Inbetriebnahme erst startet, wenn ein Servicetechniker mittels eines Eingabegeräts (Tastatur, Maus) durch positive Beantwortung der Sicherheitsabfrage die Inbetriebnahme, also das Kopieren des Speicherinhalts des Inbetriebnahmespeichers 70 in die Speichereinheit 34, freigibt. Auf diese Weise kann der Servicetechniker vor der Inbetriebnahme die korrekte Zuordnung zwischen der ersten Baugruppe 20.1 und der zweiten Baugruppe 20.2 noch einmal überprüfen.

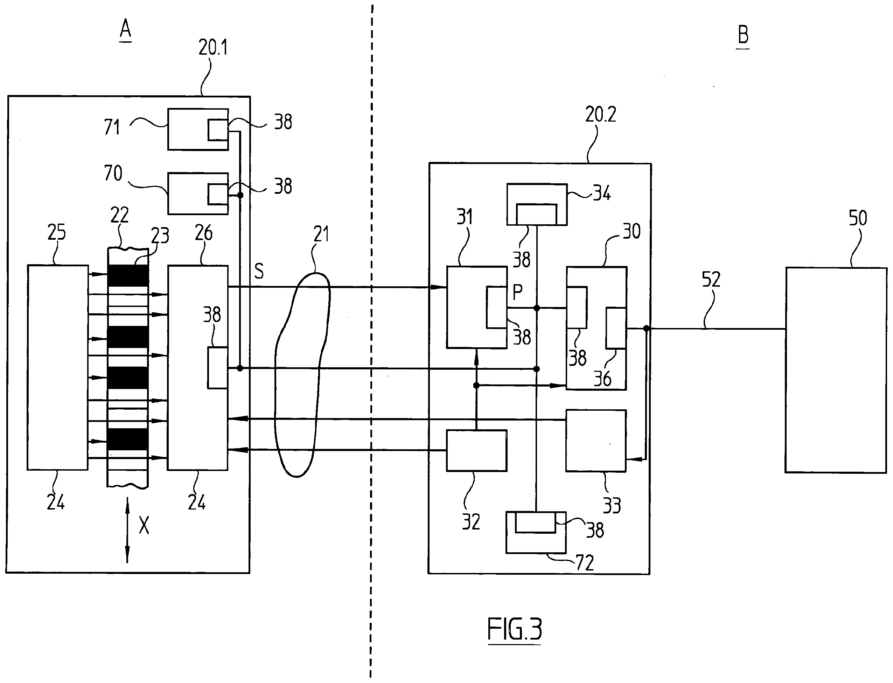

Figur 3 zeigt ein Blockdiagramm eines weiteren Ausführungsbeispiels eines erfindungsgemäßen Positionsmessgeräts 20. Komponenten, die bereits in Verbindung mit dem anhand von Figur 2 beschrieben wurden, tragen das gleiche Bezugszeichen und werden nicht noch einmal beschrieben.

In diesem Ausführungsbeispiel umfasst die zweite Baugruppe 20.2 zusätzlich einen Mikrocontroller 72, der als Inbetriebnahmeeinheit dient. Der Mikrocontroller 72 ist mit einer internen Schnittstelle 38 ausgestattet, kann also mit Komponenten des Positionsmessgeräts 20 kommunizieren, die ebenfalls eine interne Schnittstelle 38 aufweisen und über diese miteinander verbunden sind. Im Rahmen der vorliegenden Erfindung gilt das besonders für den Inbetriebnahmespeicher 70 und die Speichereinheit 34.

Alternativ zum anhand von Figur 2 beschriebenen Ausführungsbeispiel kann hier die Inbetriebnahme, also insbesondere das Kopieren der Daten des Inbetriebnahmespeichers 70 in die Speichereinheit 34 vom Mikrocontroller 72 vorgenommen werden. Die interne Schnittstelle 38 des Mikrocontrollers 72 ist hierzu als Master-Schnittstelle ausgeführt.

Der Vorteil dieser Anordnung ist, dass die Inbetriebnahme jetzt autark, also ohne Mitwirkung der Steuerungseinheit 50 vorgenommen werden kann. So kann der Mikrocontroller 72 nach dem Einschalten anhand des Inhalts des Identifikationsspeichers 71, bzw. durch Vergleich der im Inbetriebnahmespeicher 71 gespeicherten Kennung mit der in der Speichereinheit 34 gespeicherten Kennung (entsprechend der zwei im ersten Ausführungsbeispiel beschriebenen Varianten) feststellen, ob eine Inbetriebnahme erforderlich ist, oder nicht. Entsprechend kann er im ersten Fall das Positionsmessgerät 20 in den Inbetriebnahmemodus schalten, den Inhalt des Inbetriebnahmespeichers 70 in die Speichereinheit 34 kopieren und anschließend in den Normalbetriebsmodus umschalten.

Alternativ kann die Inbetriebnahme auch in diesem Ausführungsbeispiel von der Steuerungseinheit 50 initiiert werden, nur dass jetzt der Mikrocontroller 72 den Kopiervorgang durchführt.

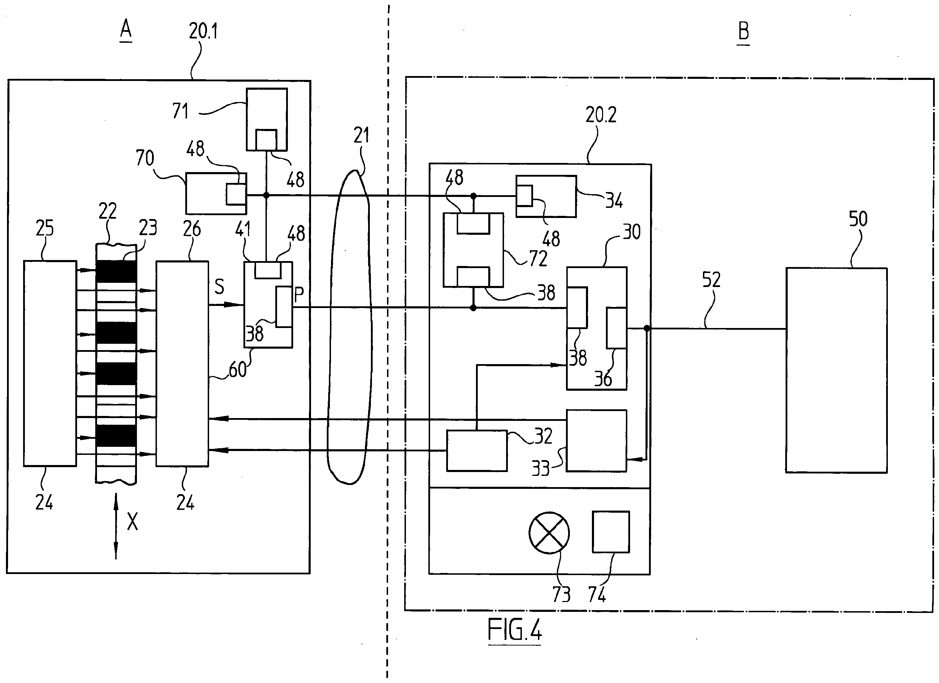

Figur 4 zeigt ein Blockdiagramm eines weiteren Ausführungsbeispiels eines erfindungsgemäßen Positionsmessgeräts 20. Bereits in den vorhergehenden Ausführungsbeispielen beschriebene Komponenten tragen das gleiche Bezugszeichen.

Abweichend zu den vorhergehend beschriebenen Ausführungsbeispielen sind der Inbetriebnahmespeicher 70, die Speichereinheit 34 und der Mikrocontroller 72 jetzt über eine separate Speicherschnittstelle 48 verbunden. Zusätzlich kann auch hier ein Identifikationsspeicher 71 vorgesehen sein, der ebenfalls eine Speicherschnittstelle 48 aufweist. Als Speicherschnittstelle 48 wird mit Vorteil eine Schnittstelle eingesetzt, die in handelsüblichen Speichereinheiten 34 bereits verfügbar ist, beispielsweise eine 12C-Schnittstelle.

Der Mikrocontroller 72 kann zusätzlich eine interne Schnittstelle 38 aufweisen. Auf diese Weise wird ein Kommunikationskanal zwischen der Steuerungseinheit 50 (über die Geräteschnittstelle 36 und die interne Schnittstelle 38) und dem Mikrocontroller 72 geschaffen.

Ebenfalls abweichend von den anhand von Figur 2 und 3 beschriebenen Ausführungsbeispielen ist hier anstelle der Signalverarbeitungseinheit 31 in der zweiten Baugruppe 20.2 eine Signalverarbeitungseinheit 41 in der ersten Baugruppe 20.1 angeordnet. Dies hat den besonderen Vorteil, dass nun bereits in der ersten Baugruppe 20.1 ein digitaler, absoluter Positionswert P erzeugt wird, der über die interne Schnittstelle 38 zur Kommunikationseinheit 30 der zweiten Baugruppe 20.2 übertragen werden kann. Dadurch, dass die Datenübertragung jetzt im Rahmen eines Datenübertragungsprotokolls erfolgt, kann durch geeignete Maßnahmen, die dem Fachmann an sich bekannt sind (z.B. Erzeugung und Übertragung von Prüfsummen, etc.), eine sichere Übertragung der digitalen, absoluten Positionswerte P zur zweiten Baugruppe 20.2 gewährleistet werden. Dies gilt besonders dann, wenn der räumliche Abstand zwischen der ersten Baugruppe 20.1 und der zweiten Baugruppe 20.2, bedingt durch den Abstand zwischen dem Strahlungsbereich A und dem strahlungssicheren Bereich B groß (mehrere Meter) ist.

Um bei der Datenübertragung zwischen der Signalverarbeitungseinheit 41 und der Kommunikationseinheit 30 eine möglichst große Störsicherheit zu erreichen, wird für die physikalische Übertragung auch bei der internen Schnittstelle 38 bevorzugt eine differentielle Datenübertragung, z.B. nach dem bekannten RS-485-Standard, eingesetzt. Da entsprechende Treiberbausteine allerdings die oben bereits erwähnten Nachteile aufweisen (hoher Preis, problematische Verfügbarkeit, große Bauform), kann physikalische Übertragung der Daten auch mittels massebezogener Digitalsignale erfolgen. In jedem Fall sind die elektrischen Leitungen 21, über die die Datenübertragung erfolgt, an die gewählte physikalische Übertragung anzupassen.

Zusätzlich zur internen Schnittstelle 38 weist die Signalverarbeitungseinheit 41 auch eine Speicherschnittstelle 48 auf. Dadurch kann sie direkt, ohne Umweg über die Kommunikationseinheit 30, Speicherinhalte der Speichereinheit 34 auslesen oder schreiben. Dadurch wird beispielsweise die interne Schnittstelle 38 entlastet, was besonders im Normalbetriebsmodus, in dem die interne Schnittstelle 38 vorwiegend zur Übertragung von Positionsdaten P benötigt wird, vorteilhaft ist.

Mit der in Figur 4 gezeigten Architektur sind alle Verfahren zur Inbetriebnahme, die bereits in Verbindung mit den vorhergehenden Ausführungsbeispielen beschrieben wurden, ebenfalls durchführbar.

In Figur 4 ist noch eine weitere vorteilhafte Möglichkeit dargestellt, das Kopieren der Daten vom Inbetriebnahmespeicher 70 zur Speichereinheit 34 zu initiieren, nämlich mit Hilfe eines Signalgebers 73 und einem Schaltelement 74, die am Gehäuse der zweiten Baugruppe 20.2 angeordnet sind. Erkennt nun der Mikrocontroller 72 (oder die Steuerungseinheit 50), beispielsweise anhand des Inhalts des Inbetriebnahmespeichers 72, dass mit der ersten Baugruppe 20.1 noch keine Inbetriebnahme durchgeführt wurde, wird nicht gleich der Inbetriebnahmemodus und der Kopiervorgang gestartet, sondern dem Servicetechniker, der an der Anlage arbeitet, erst anhand eines Signals des Signalgebers 73 (z.B. Leuchten oder Blinken einer Lampe) angezeigt, dass eine Inbetriebnahme durchzuführen ist. Der Übergang in den Inbetriebnahmemodus wird erst gestartet, wenn der Servicetechniker das Schaltelement 74 (z.B. ein Taster) betätigt. Auf diese Weise wird, ähnlich wie im ersten Ausführungsbeispiel, eine Sicherheitsabfrage bei der Inbetriebnahme einer neuen ersten Baugruppe 20.1 eingeführt, der es dem Servicetechniker erlaubt, noch einmal zu überprüfen, ob die neue erste Baugruppe 20.1 auch an der richtigen zweiten Baugruppe 20.2 angeschlossen wurde. Die Übertragung der Daten vom Inbetriebnahmespeicher 70 zur Speichereinheit 34 wird auch hier erst gestartet, wenn die Sicherheitsabfrage positiv beantwortet wurde (betätigen des Schaltelements).

Sind die Geräteschnittstelle 36 und die interne Schnittstelle 38 identisch ausgeführt, so kann die Kommunikationseinheit 30 auch lediglich die elektromechanische Verbindung (Steckverbinder und elektrische Leitungen) zwischen Geräteschnittstelle 36 und interner Schnittstelle 38 umfassen. Ebenso besteht die Möglichkeit, dass in der zweiten Baugruppe 20.2 überhaupt keine Kommunikationseinheit 30 vorgesehen ist.

Die in Figur 4 gewählte Aufteilung ist deshalb besonders günstig, weil in modernen Positionsmessgeräten 20 häufig die Detektoreinheit 24 und die Signalverarbeitungseinheit 41 mit den entsprechenden Schnittstellen 38, 48 gemeinsam in einem hochintegrierten Baustein 60 (ASIC, bzw. im Fall einer optischen Abtastung, Opto-ASIC) integriert sind. Das bedeutet, dass lediglich der hochintegrierte Baustein 60 für den Einsatz in einer Anlage, in der das Positionsmessgerät 20 einer ionisierenden, hochenergetischen Strahlung ausgesetzt sein kann, ertüchtigt werden muss, da die verbleibenden Komponenten der ersten Baugruppe - Lichtquelle 25 und Maßverkörperung 22 - die Eignung für den Einsatz im Strahlungsbereich A bereits ohne notwendige Änderungen aufweisen.

Wie in Figur 4 angedeutet, kann die zweite Baugruppe 20.2 in einem eigenen Gehäuse räumlich getrennt von der Steuerungseinheit 50 angeordnet sein. Dies hat den besonderen Vorteil, dass die Steuerungseinheit 50 überhaupt nicht "wissen" muss, dass das Positionsmessgerät 20 aus zwei Baugruppen besteht. Es ist dadurch besonders einfach, bei Anlagen, in denen bereits absolute Positionsmessgeräte eingesetzt sind, die durch aufwendige Abschirmungsmaßnahmen (z.B. Bleiummantelung) vor der auftretenden Strahlung geschützt sind, diese Positionsmessgeräte durch erfindungsgemäße Positionsmessgeräte 20 auszutauschen und das unerwünschte Gewicht der Abschirmung zu entfernen. Es muss lediglich darauf geachtet werden, dass die Geräteschnittstelle 36 kompatibel ist.

Abweichend davon ist es aber, wie durch den strichpunktiert gezeichneten Block angedeutet, auch möglich, die zweite Baugruppe 20.2 in eine Steuerungseinheit 50' zu integrieren.

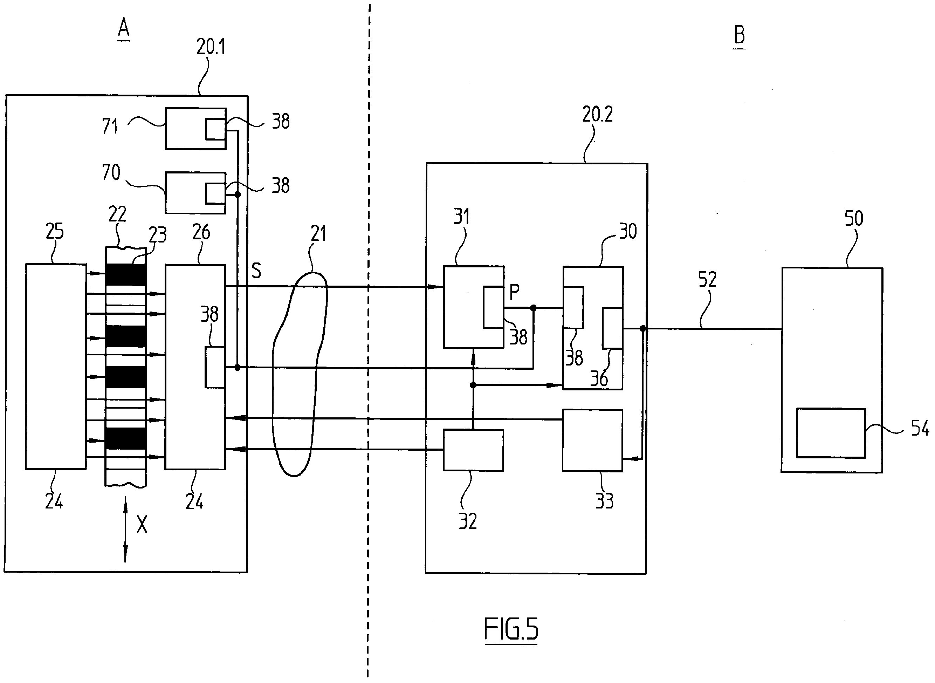

Figur 5 zeigt ein weiteres Ausführungsbeispiel eines erfindungsgemäßen Positionsmessgeräts 20. Auch hier tragen Komponenten, die bereits in den vorhergehenden Ausführungsbeispielen beschrieben wurden, die gleichen Bezugszeichen.

Abweichend zu den bisher beschriebenen Ausführungsbeispielen ist jetzt in der zweiten Baugruppe 20.2 keine Speichereinheit vorgesehen. Stattdessen befindet sich in der Steuerungseinheit 50 eine Speichereinheit 54, die geeignet ist, die Daten des Inbetriebnahmespeichers 70 zu speichern. Dementsprechend wird bei der Inbetriebnahme des Positionsmessgeräts 20, bzw. beim Austausch der erste Baugruppe 20.1, der Inhalt des Inbetriebnahmespeichers 70, insbesondere die Daten, die im Normalbetriebsmodus benötigt werden, vom Inbetriebnahmespeicher 70 in die Speichereinheit 54 kopiert. Der Kopiervorgang wird von der Steuerungseinheit 50 durchgeführt, der Zugriff auf den Inbetriebnahmespeicher erfolgt, wie bereits beschrieben, über die Geräteschnittstelle 36 und die interne Schnittstelle 38. Auch in diesem Ausführungsbeispiel kann eine Sicherheitsabfrage vorgesehen sein, bevor der Kopiervorgang gestartet wird. Im Normalbetriebsmodus wird dann auf die in der Speichereinheit 54 gespeicherten Daten zugegriffen.

## Patentansprüche

1. Absolutes Positionsmessgerät (20) umfassend
• eine erste Baugruppe (20.1), mit einer Maßverkörperung (22), auf der wenigstens eine Codespur (23) angeordnet ist und einer Abtasteinheit (24), mit der durch Abtastung der wenigstens einen Codespur (23) in einer Messrichtung (X) Positionssignale (S) erzeugbar sind, aus denen ein absoluter, digitaler Positionswert (P) generierbar ist,
• eine zweite Baugruppe (20.2), mit wenigstens einer Peripherieeinheit (30, 31, 32, 33, 34), ausgebildet zur Ausführung einer Zusatz- oder Hilfsfunktion des Positionsmessgeräts (20) und
• eine Mehrzahl elektrischer Leitungen (21), mit denen die erste Baugruppe (20.1) und die zweite Baugruppe (20.2) zur Übertragung elektrischer Signale miteinander verbunden sind,
wobei das Positionsmessgerät (20) in einem Inbetriebnahmemodus und einem Normalbetriebsmodus betreibbar ist und alle Komponenten der ersten Baugruppe (20.1), die für den Betrieb im Normalbetriebsmodus erforderlich sind, Komponenten (22, 25, 26, 41) sind, die für den Einsatz in einem Strahlungsbereich (A) einer Maschine geeignet sind und in der ersten Baugruppe (20.1) weiter ein Inbetriebnahmespeicher (70) vorgesehen ist, der Daten enthält, die für den Betrieb im Normalbetriebsmodus erforderlich sind und der nicht für den Einsatz in einem Strahlungsbereich (A) einer Maschine geeignet ist und der Inhalt des Inbetriebnahmespeichers (70) im Inbetriebnahmemodus zu einer Speichereinheit (34, 54) übertragbar ist, die außerhalb des Strahlungsbereichs angeordnet ist und für den Betrieb im Normalbetriebsmodus der Inhalt der Speichereinheit (34, 54) verwendet wird.

2. Absolutes Positionsmessgerät (20) nach Anspruch 1, wobei die Speichereinheit (34) in der zweiten Baugruppe (20.2) angeordnet ist.

3. Absolutes Positionsmessgerät (20) nach Anspruch 2, wobei in der zweiten Baugruppe (20.2) zum Übertragen der Daten vom Inbetriebnahmespeicher (70) zur Speichereinheit (34) ein Mikrocontroller (72) angeordnet ist.

4. Absolutes Positionsmessgerät (20) nach Anspruch 1, wobei die Speichereinheit (54) in einer Steuerungseinheit (50) angeordnet ist, an der das Positionsmessgerät (50) betreibbar ist.

5. Absolutes Positionsmessgerät (20) nach einem der vorhergehenden Ansprüche, wobei in der ersten Baugruppe (20.1) weiter ein Identifikationsspeicher (71) angeordnet ist, der für den Einsatz in einem Strahlungsbereich (A) einer Maschine geeignet ausgeführt ist und anhand dessen Inhalts feststellbar ist, ob eine Übertragung der Daten vom Inbetriebnahmespeicher (70) zur Speichereinheit (34, 54) erforderlich ist.

6. Absolutes Positionsmessgerät (20) nach einem der vorhergehenden Ansprüche, wobei die zweite Baugruppe (20.2) weiter ein Schaltelement (74) umfasst, durch dessen Betätigung die Inbetriebnahme startbar ist.

7. Absolutes Positionsmessgerät (20) nach einem der vorhergehenden Ansprüche, wobei die zweite Baugruppe (20.2) weiter einen Signalgeber (73) umfasst, mit dem signalisierbar ist, dass eine Inbetriebnahme erforderlich ist.

8. Verfahren zum Betreiben eines absoluten Positionsmessgeräts (20), umfassend
• eine erste Baugruppe (20.1), mit einer Maßverkörperung (22), auf der wenigstens eine Codespur (23) angeordnet ist und einer Abtasteinheit (24), mit der durch Abtastung der wenigstens einen Codespur (23) in einer Messrichtung (X) Positionssignale (S) erzeugbar sind, aus denen ein absoluter, digitaler Positionswert (P) generierbar ist,
• eine zweite Baugruppe (20.2), mit wenigstens einer Peripherieeinheit (30, 31, 32, 33, 34), ausgebildet zur Ausführung einer Zusatz- oder Hilfsfunktion des Positionsmessgeräts (20) und
• eine Mehrzahl elektrischer Leitungen (21), mit denen die erste Baugruppe (20.1) und die zweite Baugruppe (20.2) zur Übertragung elektrischer Signale miteinander verbunden sind,
wobei das Positionsmessgerät (20) in einem Inbetriebnahmemodus und einem Normalbetriebsmodus betreibbar ist und alle Komponenten der ersten Baugruppe (20.1), die für den Betrieb im Normalbetriebsmodus erforderlich sind, Komponenten (22, 25, 26, 41) sind, die für den Einsatz in einem Strahlungsbereich (A) einer Maschine geeignet sind und in der ersten Baugruppe (20.1) weiter ein Inbetriebnahmespeicher (70) vorgesehen ist, der Daten enthält, die für den Betrieb im Normalbetriebsmodus erforderlich sind und der nicht für den Einsatz in einem Strahlungsbereich (A) einer Maschine geeignet ist, wobei der Inhalt des Inbetriebnahmespeichers (70) im Inbetriebnahmemodus zu einer Speichereinheit (34, 54) übertragen wird, die außerhalb des Strahlungsbereichs (A) angeordnet ist und für den Betrieb im Normalbetriebsmodus der Inhalt der Speichereinheit (34, 54) verwendet wird.

9. Verfahren nach Anspruch 8, wobei die Übertragung des Inhalts des Inbetriebnahmespeichers (70) zur Speichereinheit (34, 54) von einer Steuerungseinheit (50) durchgeführt wird, an der das Positionsmessgerät (20) betrieben wird.

10. Verfahren nach Anspruch 8, wobei in der zweiten Baugruppe (20.2) ein Mikrocontroller (72) angeordnet ist, der als Inbetriebnahmeeinheit die Übertragung des Inhalts des Inbetriebnahmespeichers (70) zur Speichereinheit (34, 54) durchführt.

11. Verfahren nach einem der Ansprüche 8 bis 10, wobei in der ersten Baugruppe (20.1) ein Identifikationsspeicher (71) angeordnet ist, der für den Einsatz in einem Strahlungsbereich (A) einer Maschine geeignet ausgeführt ist und anhand dessen Inhalts festgestellt wird, ob eine Übertragung der Daten vom Inbetriebnahmespeicher (70) zur Speichereinheit (34, 54) erforderlich ist.

12. Verfahren nach einem der Ansprüche 8 bis 11, wobei die Übertragung des Inhalts des Inbetriebnahmespeichers (70) erst gestartet wird, wenn ein Servicetechniker eine Sicherheitsabfrage positiv beantwortet.

## Claims

1. Absolute position measuring device (20), comprising
• a first assembly (20.1) comprising a standard (22) in which at least one code track (23) is arranged and a scanning unit (24) by means of which position signals (S) are producible by scanning the at least one code track (23) in a measurement direction (X), from which position signals an absolute, digital position value (P) is generable,
• a second assembly (20.2) with at least one peripheral unit (30, 31, 32, 33, 34), embodied to carry out an additional or auxiliary function of the position measuring device (20), and
• a plurality of electrical lines (21), by means of which the first assembly (20.1) and the second assembly (20.2) are connected to one another for transferring electrical signals,
wherein the position measuring device (20) is operable in a start-up mode and a normal operating mode and all components of the first assembly (20.1) required for operation in the normal operating mode are components (22, 25, 26, 41) which are suitable for use in a radiation region (A) of a machine, and a start-up storage (70) is furthermore provided in the first assembly (20.1), which start-up storage contains data required for operation in the normal operating mode and which start-up storage is not suitable for use in a radiation region (A) of a machine, and the content of the start-up storage (70) is transferable in the start-up mode to a storage unit (34, 54), which is arranged outside of the radiation region, and the content of the storage unit (34, 54) is used for operation in the normal operating mode.

2. Absolute position measuring device (20) according to Claim 1, wherein the storage unit (34) is arranged in the second assembly (20.2).

3. Absolute position measuring device (20) according to Claim 2, wherein a microcontroller (72) is arranged in the second assembly (20.2) for transferring the data from the start-up storage (70) to the storage unit (34).

4. Absolute position measuring device (20) according to Claim 1, wherein the storage unit (54) is arranged in a control unit (50), at which the position measuring device (50) is operable.

5. Absolute position measuring device (20) according to one of the preceding claims, wherein furthermore an identification storage (71) is arranged in the first assembly (20.1), which identification storage is configured in a suitable manner for use in a radiation region (A) of a machine and on the basis of the content thereof it is determinable whether a transfer of the data from the start-up storage (70) to the storage unit (34, 54) is required.

6. Absolute position measuring device (20) according to one of the preceding claims, wherein the second assembly (20.2) furthermore comprises a switch element (74), the actuation of which renders it possible to start the start-up operation.

7. Absolute position measuring device (20) according to one of the preceding claims, wherein the second assembly (20.2) furthermore comprises a transducer (73) which renders it possible to signal that a start-up-operation is required.

8. Method for operating an absolute position measuring device (20) comprising
• a first assembly (20.1) comprising a standard (22) in which at least one code track (23) is arranged and a scanning unit (24) by means of which position signals (S) are producible by scanning the at least one code track (23) in a measurement direction (X), from which position signals an absolute, digital position value (P) is generable,
• a second assembly (20.2) with at least one peripheral unit (30, 31, 32, 33, 34), embodied to carry out an additional or auxiliary function of the position measuring device (20), and
• a plurality of electrical lines (21), by means of which the first assembly (20.1) and the second assembly (20.2) are connected to one another for transferring electrical signals,
wherein the position measuring device (20) is operable in a start-up mode and a normal operating mode and all components of the first assembly (20.1) required for operation in the normal operating mode are components (22, 25, 26, 41) which are suitable for use in a radiation region (A) of a machine, and a start-up storage (70) is furthermore provided in the first assembly (20.1), which start-up storage contains data required for operation in the normal operating mode and which start-up storage is not suitable for use in a radiation region (A) of a machine, wherein the content of the start-up storage (70) is transferred in the start-up mode to a storage unit (34, 54), which is arranged outside of the radiation region (A), and the content of the storage unit (34, 54) is used for operation in the normal operating mode.

9. Method according to Claim 8, wherein the transfer of the content from the start-up storage (70) to the storage unit (34, 54) is performed by a control unit (50), at which the position measuring device (20) is operated.

10. Method according to Claim 8, wherein a microcontroller (72) is arranged in the second assembly (20.2), which microcontroller, as start-up unit, carries out the transfer of the content of the start-up storage (70) to the storage unit (34, 54).

11. Method according to one of Claims 8 to 10, wherein an identification storage (71) is arranged in the first assembly (20.1), which identification storage is configured in a suitable manner for use in a radiation region (A) of a machine and on the basis of the content thereof it is determinable whether a transfer of the data from the start-up storage (70) to the storage unit (34, 54) is required.

12. Method according to one of Claims 8 to 11, wherein the transfer of the content of the start-up storage (70) is only started once a service technician provides a positive answer to a confirmation prompt.

## Revendications

1. Appareil de mesure de position absolue (20), comprenant
- un premier module (20.1) comportant un étalon de mesure (22) sur lequel est disposée au moins une piste de code (23) et une unité de balayage (24) au moyen de laquelle des signaux de position (S), à partir desquels une valeur de position numérique absolue (P) peut être générée, peuvent être générés par balayage dans une direction de mesure (X) de l'au moins une piste de code (23),
- un deuxième module (20.2), comportant au moins une unité périphérique (30, 31, 32, 33, 34), conçu pour exécuter une fonction supplémentaire ou auxiliaire de l'appareil de mesure de position (20) et
- une pluralité de lignes électriques (21) au moyen desquelles le premier module (20.1) et le deuxième module (20.2) sont reliés l'un à l'autre pour transmettre des signaux électriques,
dans lequel l'appareil de mesure de position (20) peut être mis en fonctionnement dans un mode de mise en service et un mode de fonctionnement normal, et tous les composants du premier module (20.1) qui sont nécessaires au fonctionnement dans le mode de fonctionnement normal sont des composants (22, 25, 26, 41) qui sont appropriés pour une mise en oeuvre dans une zone de rayonnement (A) d'une machine et dans lequel il est en outre prévu dans le premier module (20.1) une mémoire de mise en service (70) qui contient des données nécessaires au fonctionnement dans le mode de fonctionnement normal et qui n'est pas appropriée pour une mise en oeuvre dans une zone de rayonnement (A) d'une machine et dans lequel le contenu de la mémoire de mise en service (70) peut être transféré, dans le mode de mise en service, à une unité à mémoire (34, 54) qui est disposée à l'extérieur de la zone de rayonnement et le contenu de l'unité à mémoire (34, 54) est utilisé pour le fonctionnement dans le mode de fonctionnement normal.

2. Appareil de mesure de position absolue (20) selon la revendication 1, dans lequel l'unité à mémoire (34) est disposée dans le deuxième module (20.2).

3. Appareil de mesure de position absolue (20) selon la revendication 2, dans lequel un microcontrôleur (72) est disposé dans le deuxième module (20.2) pour transmettre les données de la mémoire de mise en service (70) à l'unité à mémoire (34).

4. Appareil de mesure de position absolue (20) selon la revendication 1, dans lequel l'unité à mémoire (54) est disposée dans une unité de commande (50) sur laquelle l'appareil de mesure de position (50) peut être mis en fonctionnement.

5. Appareil de mesure de position absolue (20) selon l'une quelconque des revendications précédentes, dans lequel une mémoire d'identification (71) est en outre disposée dans le premier module (20.1), laquelle mémoire d'identification est réalisée de manière appropriée pour une mise en oeuvre dans une région de rayonnement (A) d'une machine et dans lequel il peut être établi sur la base de son contenu si une transmission des données est nécessaire de la mémoire de mise en service (70) à l'unité à mémoire (34, 54).

6. Appareil de mesure de position absolue (20) selon l'une quelconque des revendications précédentes, dans lequel le deuxième module (20.2) comprend en outre un élément de commutation (74) par l'actionnement duquel la mise en service peut être déclenchée.

7. Appareil de mesure de position absolue (20) selon l'une quelconque des revendications précédentes, dans lequel le deuxième module (20.2) comprend en outre un générateur de signal (73) au moyen duquel il est possible de signaler qu'une mise en service est nécessaire.

8. Procédé de mise en fonctionnement d'un appareil de mesure de position absolue (20), comprenant
- un premier module (20.1) comportant un étalon de mesure (22) sur lequel est disposée au moins une piste de code (23) et une unité de balayage (24) au moyen de laquelle des signaux de position (S), à partir desquels une valeur de position numérique absolue (P) peut être générée, peuvent être générés par balayage dans une direction de mesure (X) de l'au moins une piste de code (23)
- un deuxième module (20.2), comportant au moins une unité périphérique (30, 31, 32, 33, 34), conçu pour exécuter une fonction supplémentaire ou auxiliaire de l'appareil de mesure de position (20) et
- une pluralité de lignes électriques (21) au moyen desquelles le premier module (20.1) et le deuxième module (20.2) sont reliés l'un à l'autre pour transmettre des signaux électriques,
dans lequel l'appareil de mesure de position (20) peut être mis en fonctionnement dans un mode de mise en service et un mode de fonctionnement normal, et tous les composants du premier module (20.1) qui sont nécessaires au fonctionnement dans le mode de fonctionnement normal sont des composants (22, 25, 26, 41) qui sont appropriés pour une mise en oeuvre dans une zone de rayonnement (A) d'une machine et dans lequel il est en outre prévu dans le premier module (20.1) une mémoire de mise en service (70) qui contient des données nécessaires au fonctionnement dans le mode de fonctionnement normal et qui n'est pas appropriée pour une mise en oeuvre dans une zone de rayonnement (A) d'une machine, dans lequel le contenu de la mémoire de mise en service (70) est transmis, dans un mode de mise en service, à une unité à mémoire (34, 54) qui est disposée à l'extérieur de la zone de rayonnement (A) et le contenu de l'unité à mémoire (34, 54) est utilisé pour le fonctionnement dans le mode de fonctionnement normal.

9. Procédé selon la revendication 8, dans lequel la transmission du contenu de la mémoire de mise en service (70) à l'unité à mémoire (34, 54) est effectuée par une unité de commande (50) sur laquelle l'appareil de mesure de position (20) est mis en fonctionnement.

10. Procédé selon la revendication 8, dans lequel il est prévu dans le deuxième module (20.2) un microcontrôleur (72) qui effectue, en tant qu'unité de mise en service, la transmission du contenu de la mémoire de mise en service (70) à l'unité à mémoire (34, 54).

11. Procédé selon l'une quelconque des revendications 8 à 10, dans lequel il est prévu dans le premier module (20.1) une mémoire d'identification (71) qui est réalisée de manière appropriée pour une mise en oeuvre dans une région de rayonnement (A) d'une machine et dans lequel il est établi sur la base de son contenu si une transmission des données est nécessaire de la mémoire de mise en service (70) à l'unité à mémoire (34, 54).

12. Procédé selon l'une quelconque des revendications 8 à 11, dans lequel la transmission du contenu de la mémoire de mise en service (70) n'est déclenchée que lorsqu'un technicien de service répond positivement à une question de sécurité.
